# EUROPEAN PATENT APPLICATION

(11) **EP 4 468 144 A2**
(43) Date of publication of application: **27.11.2024**
(21) Application number: 24153657.2
(22) Date of filing: 24.01.2024
(51) Int. Cl.: G06F 9/30, G06F 15/78

(54) **COMPUTE EXPRESS LINK MEMORY DEVICE AND COMPUTING SYSTEM**

(30) Priority: 23.05.2023 KR 20230066421; 21.08.2023 KR 20230109241
(71) Applicant: Samsung Electronics Co., Ltd., Suwon-si, Gyeonggi-do 16677 (KR)
(72) Inventor: PARK, Sangsu, Suwon-si, Gyeonggi-do 16677 (KR); KIM, Kyungsoo, Suwon-si, Gyeonggi-do 16677 (KR); KIM, Nayeon, Suwon-si, Gyeonggi-do 16677 (KR); SO, Jinin, Suwon-si, Gyeonggi-do 16677 (KR); WOO, Kyoungwan, Suwon-si, Gyeonggi-do 16677 (KR); LEE, Younghyun, Suwon-si, Gyeonggi-do 16677 (KR); LEE, Jong-Geon, Suwon-si, Gyeonggi-do 16677 (KR); JUNG, Jin, Suwon-si, Gyeonggi-do 16677 (KR); CHO, Jeonghyeon, Suwon-si, Gyeonggi-do 16677 (KR)
(74) Representative: Kuhnen & Wacker Patent- und Rechtsanwaltsbüro PartG mbB

(57) **Abstract**

A compute express link, CXL, memory device (800) includes a memory device (871-874) storing data, and a controller (810) configured to read the data from the memory device (871-874) based on a first command received through a first protocol, select a calculation engine (840) based on a second command received through a second protocol different from the first protocol, and control the calculation engine (840) to perform a calculation on the read data.

## Description

### BACKGROUND

### 1. Field

The present disclosure relates generally to memory devices, and more particularly, to a compute express link (CXL) memory device and a computing system including the same.

### 2. Description of Related Art

In conjunction with an emergence of artificial intelligence (AI) technologies, large language models (LLMs) may be gaining popularity as the LLMs may be used to provide services in various AI-based fields. For example, the LLM-based services may be trending toward larger model sizes that may be capable to provide higher performance services. As a result, the LLMs may need to be implemented on computing systems including large capacity and/or high bandwidth memory devices that may need to support high computing performance requirements. A possible approach for obtaining the large capacity memory and/or high computing performance may include using a plurality of graphics processing units (GPUs).

However, the use of GPUs may be constrained by limitations in memory capacity and/or computational inefficiency due to the structural characteristics of the GPUs.

### SUMMARY

One or more example embodiments of the present disclosure provide a large capacity compute express link (CXL) device and a computing system that provides services based on large language models (LLMs).

Further, one or more example embodiments of the present disclosure provide a CXL device and a computing system that performs calculations efficiently by selecting a calculation circuit based on a type of the calculation to be performed.

According to an aspect of the present disclosure, a CXL memory device includes a memory device storing data, and a controller configured to read the data from the memory device based on a first command received through a first protocol, select a calculation engine based on a second command received through a second protocol different from the first protocol, and control the calculation engine to perform a calculation on the read data.

According to an aspect of the present disclosure, a computing system includes a host configured to output at least one of a first calculation command and a second calculation command, an accelerator configured to operate based on the first calculation command, a memory device configured to operate based on the second calculation command, and a CXL interface configured to transmit the first calculation command to the accelerator, and transmit the second calculation command to the memory device.

According to an aspect of the present disclosure, a CXL memory device includes a calculation engine including a first calculation circuit configured to perform a first calculation on an input data and LLM data, and a second calculation circuit configured to perform a second calculation on the input data and the LLM data, the first calculation being different from the second calculation, and a scheduler configured to receive a calculation command through a CXL interface, and select, based on the calculation command, at least one of the first calculation circuit and the second calculation circuit.

Additional aspects may be set forth in part in the description which follows and, in part, may be apparent from the description, and/or may be learned by practice of the presented embodiments.

### BRIEF DESCRIPTION OF DRAWINGS

The above and other aspects, features, and advantages of certain embodiments of the present disclosure will become apparent from the following description taken in conjunction with the accompanying drawings, in which:
FIG. 1 is a block diagram of a computing system to which a compute express link (CXL) memory is applied, according to an embodiment;
FIG. 2 is a schematic block diagram of a CXL memory, according to an embodiment;
FIG. 3 is a view of a matrix-vector multiplication operation performed by an operation circuit of a CXL memory, according to an embodiment;
FIG. 4 is a circuit diagram of an operation of an operation circuit, according to an embodiment;
FIG. 5 is a block diagram of a CXL memory, according to an embodiment;
FIG. 6 is a schematic block diagram of a CXL memory, according to an embodiment;
FIG. 7 is a view of a matrix-matrix multiplication calculation performed by a calculation circuit of a CXL memory, according to an embodiment;
FIG. 8 is a view of a calculation of a calculation circuit, according to an embodiment;
FIG. 9 is a circuit diagram of a processing element included in a calculation circuit, according to an embodiment;
FIG. 10 is a block diagram of a CXL memory, according to an embodiment;
FIG. 11 is a block diagram of a processing engine, according to an embodiment;
FIG. 12 is a block diagram of a computing system using a CXL memory, according to an embodiment;
FIG. 13 is a block diagram of a computing system using a CXL memory, according to an embodiment;
FIG. 14 is a flowchart of a calculation method of a CXL memory, according to an embodiment;
FIG. 15 is a block diagram of a computing system to which a storage system is applied, according to an embodiment;
FIG. 16 is a block diagram of a computing system, according to an embodiment; and
FIG. 17 is a block diagram of a server to which a computing system is applied, according to an embodiment.

### DETAILED DESCRIPTION OF THE EMBODIMENTS

In the following detailed description, only certain embodiments of the present disclosure have been shown and described, simply by way of illustration. As those skilled in the art may recognize, the described embodiments may be modified in various different ways, without departing from the scope of the present disclosure. Although if in the following a CXL memory device is not described with all features of the claims, it is understood that each of the CXL memory devices described below may include all features of any one of the claimed CXL memory devices.

Accordingly, the drawings and description are to be regarded as illustrative in nature and not restrictive. Like reference numerals may designate like elements throughout the specification. In a flowchart described with reference to the drawings, an order of operations may be changed, several operations may be merged, some operations may be divided, and specific operations may not be performed.

In addition, expressions written in the singular may be construed in the singular or plural unless an explicit expression such as "one" or "single" is used. Terms including ordinal numbers such as first, second, and the like may be used to describe various components, and may not be interpreted as limiting these components. These terms may be used for the purpose of distinguishing one constituent element from other constituent elements.

As used herein, each of such phrases as "A or B," "at least one of A and B," "at least one of A or B," "A, B, or C," "at least one of A, B, and C," and "at least one of A, B, or C," may include any possible combination of the items enumerated together in a corresponding one of the phrases. It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment.

The embodiments herein may be described and illustrated in terms of blocks, as shown in the drawings, which carry out a described function or functions. These blocks, which may be referred to herein as units or modules or the like, or by names such as device, logic, circuit, controller, accelerator, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

Hereinafter, various embodiments of the present disclosure are described with reference to the accompanying drawings.

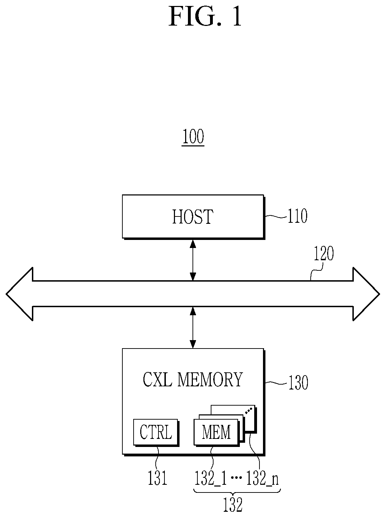

FIG. 1 is a block diagram of a computing system to which a compute express link (CXL) memory is applied, according to an embodiment.

Referring to FIG. 1, a computing system 100, according to an embodiment, may be and/or may be included in user devices such as, but not limited to, a personal computer (PC), a laptop computer, a server, a data center, a media player, a digital camera, and/or automotive devices such as, but not limited to, a navigation system, a black box, a vehicle electrical device, and the like. Alternatively or additionally, the computing system 100 may be and/or may include a mobile system such as, but not limited to, a portable communication terminal (e.g., a mobile phone), a smart phone, a tablet PC, a wearable device, a healthcare device, an Internet of Things (IoT) device, and the like.

The computing system 100, according to an embodiment, may include a host 110 and a CXL memory 130. The host 110 and the CXL memory 130 may be connected and communicate through a CXL interface 120. The CXL interface 120 may include (e.g., implement) lower protocols such as, but not limited to, a CXL.io protocol, a CXL.mem protocol, a CXL.cache protocol, and the like.

The host 110 may control the overall operations of the computing system 100. In an embodiment, the host 110 may be and/or may include one of various processors, such as, but not limited to, a central processing unit (CPU), a graphics processing unit (GPU), a neural processing unit (NPU), a data processing unit (DPU), and the like. In an embodiment, the host 110 may include a single core processor and/or a multi-core processor.

The CXL memory 130 may include a CXL controller (CTRL) 131 and a plurality of memory devices (MEM) 132. The CXL controller 131 may be configured to store data in the plurality of memory devices 132. Alternatively or additionally, the CXL controller 131 may be configured to transmit data stored in the plurality of memory devices 132 to the host 110 under the control of the host 110.

The plurality of memory devices 132 may include a first memory device 132_1 to an n-th memory device 132_n, where n is a positive integer greater than zero (0). In an embodiment, the plurality of memory devices 132 may be configured to store data of a large language model (LLM). The CXL controller 131 may load data from the plurality of memory devices 132, according to the instructions of the host 110, and perform a calculation on the data. In an embodiment, the plurality of memory devices 132 may be and/or may include a dynamic random access memory (DRAM). However, the present disclosure is not limited in this regard. That is, the plurality of memory devices 132 may be and/or may include other types of memory devices.

In an embodiment, the host 110 and the CXL memory 130 may be configured to share the same interface. For example, the host 110 and the CXL memory 130 may communicate with each other through the CXL interface 120. In an embodiment, the CXL interface 120 may refer to low-latency and high-bandwidth links that enable various connections between accelerators, memory devices, and/or various electronic devices. The CXL interface 120 may support a dynamic protocol multiplexing memory accesses and an input/output protocol and may maintain memory coherency between memory spaces of the interconnected devices.

Hereinafter, for better understanding and ease of description, it may be assumed that the host 110 and the CXL memory 130 communicate with each other through the CXL interface 120. However, the present disclosure is not limited in this regard. That is, the host 110 and the CXL memory 130 may communicate with each other based on other various computing interfaces such as, but not limited to, a Gen-Z protocol, a NVLink protocol, a cache coherent interconnect for accelerators (CCIX) protocol, and an open coherent accelerator processor interface (CAPI) protocol, and the like.

In an embodiment, the host 110 may instruct the CXL memory 130 to perform a matrix-vector multiplication calculation. The host 110 may instruct the matrix-vector multiplication calculation to the CXL controller 131 by using the CXL.io protocol and/or the CXL.mem protocol of the CXL interface 120. For example, the host 110 may transmit a command instructing the matrix-vector multiplication calculation to the CXL controller 131 by using the CXL.io protocol, and load the data that is the subject of the calculation of plurality of memory devices 132 through the CXL controller 131 by using the CXL.mem protocol. For example, the data that is subjected to the calculation may be a weight value (and/or a filter data) of the LLM. The CXL controller 131 may receive the input data from the host 110 and perform the matrix-vector multiplication calculation on the input data and the weight value. The CXL controller 131 may include a calculation circuit that performs the matrix-vector multiplication calculation. The calculation circuit may include an adder tree in which a plurality of multipliers and a plurality of adders perform calculations in a tree shape. In the adder tree, at the first level where data is input, the plurality of multipliers may be disposed, and at the second level, which is the next level after the first level, the plurality of adders may be disposed up to the final level where the calculation result is output. The CXL controller 131 may perform the matrix-vector multiplication calculation on the input data and the data of the plurality of memory devices 132 by using a calculation circuit.

In an embodiment, the host 110 may instruct at least one of the matrix-matrix multiplication calculation and the matrix-vector multiplication calculation to the CXL memory 130. The host 110 may instruct the matrix-matrix multiplication calculation and/or the matrix-vector multiplication calculation to the CXL controller 131 by using the CXL.io protocol and the CXL.mem protocol of the CXL interface 120. For example, the host 110 may transmit a command instructing the matrix-matrix multiplication calculation and/or the matrix-vector multiplication calculation to the CXL controller 131 by using the CXL.io protocol, and may load data that is the subject of the calculation of the plurality of memory devices 132 through the CXL controller 131 by using the CXL.mem protocol. For example, the data that is the subject to the calculation may be the weight value of an LLM. The CXL controller 131 may receive the input data from the host 110 and perform the matrix-matrix multiplication calculation and/or the matrix-vector multiplication calculation on the input data and the weight value. The CXL controller 131 may include a first calculation circuit that performs the matrix-matrix multiplication calculation and a second calculation circuit that performs the matrix-vector multiplication calculation. The first calculation circuit may include a processing element (PE) array in which the plurality of processing elements are disposed. In an embodiment, one PE may include a multiplier and an adder. However, the present disclosure is not limited in this regard. That is, the PE may include more than one (1) multiplier and/or more than one (1) adder. The second calculation circuit may include an adder tree in which a plurality of multipliers and a plurality of adders perform the calculations in a tree shape. The plurality of multipliers may be disposed at the first level of the adder tree, and the plurality of adders may be disposed from the second level to the final level. The CXL controller 131 may select either the first calculation circuit or the second calculation circuit based on the command of host 110. For example, the CXL controller 131 may select the first calculation circuit when the host 110 indicates the matrix-matrix multiplication calculation. As another example, the CXL controller 131 may select the second calculation circuit when the host 110 indicates the matrix-vector multiplication calculation. The CXL controller 131 may perform the matrix-matrix multiplication calculation and/or the matrix-vector multiplication calculation on the input data and the data of the plurality of memory devices 132 by using the selected calculation circuit.

In a situation where the data of an LLM increases exponentially, accelerators such as a GPU may support a limited memory bandwidth and/or a limited memory capacity. Consequently, the LLM may need to be distributed and stored on each accelerator chip. As a result, extensive inter-chip communication may be needed to process the LLM resulting in a relatively large overhead in terms of execution time and power consumption.

The host 110, according to an embodiment, may service the LLM by using CXL memory 130, which supports a relatively high memory bandwidth and a relatively large memory capacity by using the CXL interface 120. That is, the computing system 100, according to an embodiment, may apply the CXL memory 130, which stores the data of the LLM, to shorten the movement time of the data of the LLM and lower the overhead in terms of the execution time and the power consumption. In addition, the computing system 100, according to an embodiment, includes the CXL memory 130 that selects the appropriate calculation circuit according to the calculation type of the LLM, so the efficient calculation may be performed with relatively low latency and relatively low power consumption.

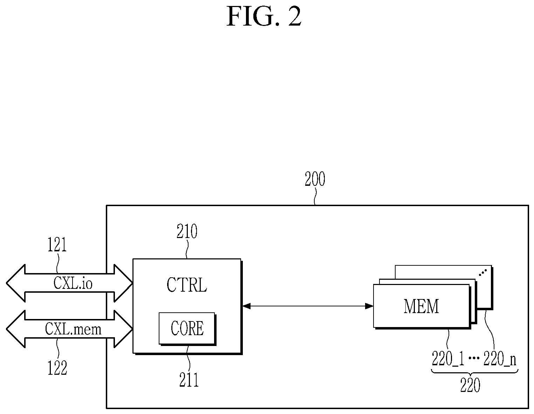

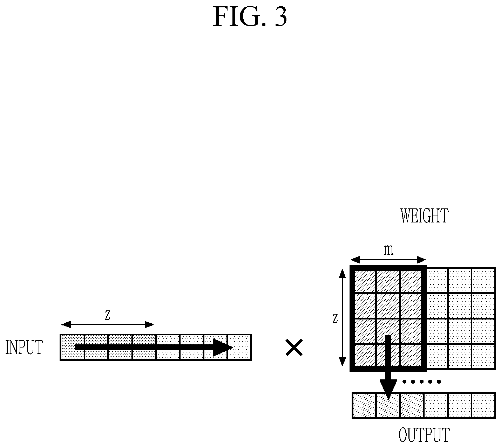

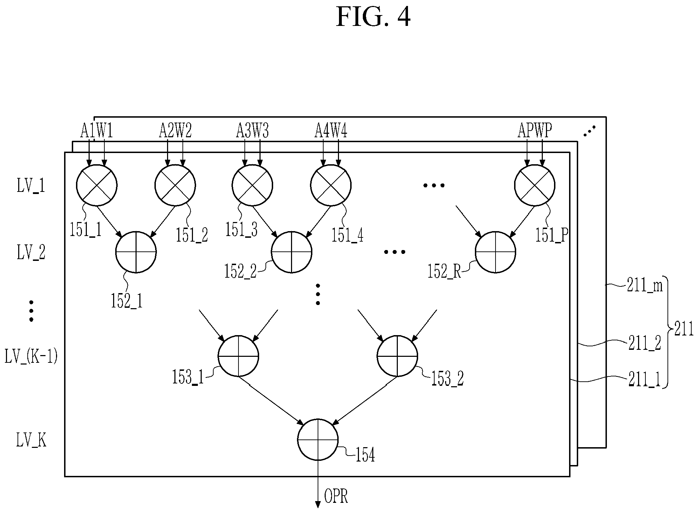

FIG. 2 is a schematic block diagram of a CXL memory, according to an embodiment. FIG. 3 is a view of a matrix-vector multiplication calculation performed by a calculation circuit of a CXL memory, according to an embodiment. FIG. 4 is a circuit diagram of a calculation of a calculation circuit, according to an embodiment.

Referring to FIG. 2, a CXL memory 200, according to an embodiment, may include a CXL controller (CTRL) 210 and a plurality of memory devices (MEM) 220. The plurality of memory devices 220 may include a first memory device 220_1 to an n-th memory device 220_n and may be configured to store LLM data. The CXL controller 210 may include a calculation circuit (CORE) 211 that performs a calculation on the LLM data retrieved from the plurality of memory devices 220.

The CXL memory 200 may include and/or may be similar in many respects to or may be the CXL memory 130 described above with reference to FIG. 1, and may include additional features not mentioned above. Furthermore, the CXL controller 210 and the plurality of memory devices 220 may include and/or may be similar in many respects to or may be the CXL controller 131 and a plurality of memory devices 132, respectively, described above with reference to FIG. 1, and may include additional features not mentioned above. Consequently, repeated descriptions of the CXL memory 200, CXL controller 210, and the plurality of memory devices 220 described above with reference to FIG. 1 may be omitted for the sake of brevity.

The CXL controller 210, according to an embodiment, may receive instructions from the host (e.g., host 110 of FIG. 1). For example, the CXL controller 210 may receive commands from the host through the CXL.io protocol 121. The CXL controller 210 may process the commands of the host by using the calculation circuit 211. For example, the calculation circuit 211 may process instructions from the host instructing the matrix-vector multiplication calculation.

The calculation circuit 211 may perform matrix-vector multiplication calculation on the input data expressed as a vector and the LLM data expressed as a matrix. In an embodiment, the input data and the LLM data may be stored in the plurality of memory devices 220 and moved to the calculation circuit 211 for the calculation. In an embodiment, the input data may be input from the host to the calculation circuit 211 through the CXL.mem protocol 122, and the LLM data may be stored in the plurality of memory devices 220 and be moved to the calculation circuit 211 for the calculation. The calculation circuit 211 may perform the matrix-vector multiplication calculation as described with reference to FIG. 3. Referring to FIGS. 2 and 3 together, the calculation circuit 211 may perform the multiplication calculation on an input data INPUT and an LLM data WEIGHT to generate an output data OUTPUT. The calculation circuit 211 may include an adder tree for performing the multiplication calculation (e.g., an inner product calculation) on a vector (e.g., one row and z columns) of a size 1 × z of the input data INPUT and a matrix (e.g., z rows and one column) of a size z × 1, where z is a positive integer greater than zero (0). The calculation circuit 211 may include m adder trees for performing the multiplication calculation in parallel, where m is a positive integer greater than zero (0). That is, the calculation circuit 211 may perform the multiplication calculation on the vector of the size 1 × z of the input data INPUT and the matrix (e.g., z rows and m columns) of the size z × m of the LLM data WEIGHT.

Referring to FIG. 4, the calculation circuit 211 may perform the matrix-vector multiplication calculation in parallel. For example, the calculation circuit 211 may include a first calculation lane 211_1, a second calculation lane 211_2, to an m-th calculation lane 211_m, and each calculation lane may include an adder tree. By performing the matrix-vector multiplication calculation in each of the first to m-th calculation lanes 211_1 to 211_m, the calculation circuit 211 may implement a matrix-vector multiplication calculation in parallel. In FIG. 4, the operation of the first calculation lane 211_1 is described, and the overlapping description for the second to m-th calculation lanes 211_1 to 211_m is omitted for the sake of brevity.

The first calculation lane 211_1 may include an adder tree. The adder tree may include a plurality of multipliers (e.g., first multiplier 151_1, second multiplier 151_2, third multiplier 151_3, fourth multiplier 151_4, to P-th multiplier 151_P, where P is a positive integer greater than zero (0)) and a plurality of adders (e.g., first top adder 152_1, second top adder 152_2, to R-th top adder 152_R, first bottom adder 153_1, second bottom adder 153_2, and final adder 154, where R is a positive integer greater than zero (0)). The plurality of multipliers 151_1 to 151_P and the plurality of adders 152_1 to 154 may perform the calculation with the tree shape. For example, the first calculation lane 211_1 may include levels and/or layers (e.g., first level LV_1, second level LV_2, (K-1)-th level LV_(K-1), and K-th level LV_K, where K is a positive integer greater than zero (0)). In the first level LV_1, the plurality of multipliers 151_1 to 151_P may be disposed. The plurality of adders 152_1 to 154 may be disposed from the second level LV_2 that is the next level of first level LV_1 to the K-th level LV_K outputting the calculation result OPR.

In an embodiment, a plurality of P multipliers (e.g., 151_1 to 151_P) may be disposed at the first level LV_1, and P may be a power function of two (2) (e.g., P = 2^X, where X is a positive integer greater than or equal to zero (0)). That is, the plurality of multipliers 151_1 to 151_P may receive P input data (e.g., first input data A1, second input data A2, third input data A3, fourth input data A4, to P-th input data AP) and P weight values (e.g., first weight value W1, second weight value W2, third weight value W3, fourth weight value W4, to P-th weight value WP). The plurality of multipliers 151_1 to 151_P may perform the multiplication calculation on the input data A1 to AP and the weight values W1 to WP. The plurality of multipliers 151_1 to 151_P may output the result of the multiplication calculation performed on the input data A1 to AP and the weight values W1 to WP to the adders 152_1 to 152_R of the second level LV_2. For example, the calculation result of the first multiplier 151_1 and the second multiplier 151_2 may be input to the first top adder 152_1, the calculation result of the third multiplier 151_3 and the fourth multiplier 151_4 may be input to the second top adder 152_2, and the calculation result of the (P-1)-th multiplier 151_(P-1) and the P-th multiplier 151_P may be input to the R-th top adder 152_R.

In an embodiment, a plurality of Q adders (e.g., 152_1 to 154) may be disposed from the second level LV_2 to the K-th level LV_K. For example, Q may be a positive integer that is smaller than P by 1 (e.g., Q = P - 1). That is, if P is a power function of two (2) (e.g., P = 2^X), then Q may be equal to 2^X - 1. The number of top adders (e.g., first to R-th top adders 152_1 to 152_R) disposed at the second level LV_2 may be equal to half of P (e.g., R = P / 2). The number of adders disposed at any one of the second to the K-th levels (e.g., LV_2 to LV_K) may be half of the number of the adders disposed at the previous level. In this manner, the (K-1)-th level LV_(K-1) may consist of two adders (e.g., first bottom adder 153_1 and second bottom adder 153_2), and the K-th level LV_K may consist of one adder (e.g., final adder 154). That is, the number of the plurality of adders 152_1 to 154 disposed at the second to K-th levels LV_2 to LV_K may be smaller than the number of the plurality of multipliers 151_1 to 151_P disposed at the first level LV_1 by 1 (e.g., Q = P - 1).

The plurality of adders 152_1 to 154 may perform an addition calculation on two data input thereto. For example, the first top adder 152_1 may perform the addition calculation on the data input from the first multiplier 151_1 and the data input from the second multiplier 151_2. The first top adder 152_1 may output the result of the addition calculation to a third level adder. In an embodiment, the plurality of multipliers 151_1 to 151_P and the plurality of adders 152_1 to 154 of the first calculation lane 211_1 may perform the multiplication calculation and/or the addition calculation, and the final adder 154 may output the calculation result OPR that is the final result of the multiplication calculation or the addition calculation. The second to m-th calculation lanes 211_2 to 211_m may also output calculation results. The calculation circuit 211 may transmit the calculation results of the first to m-th calculation lanes 211_1 to 211_m to the plurality of memory devices 220.

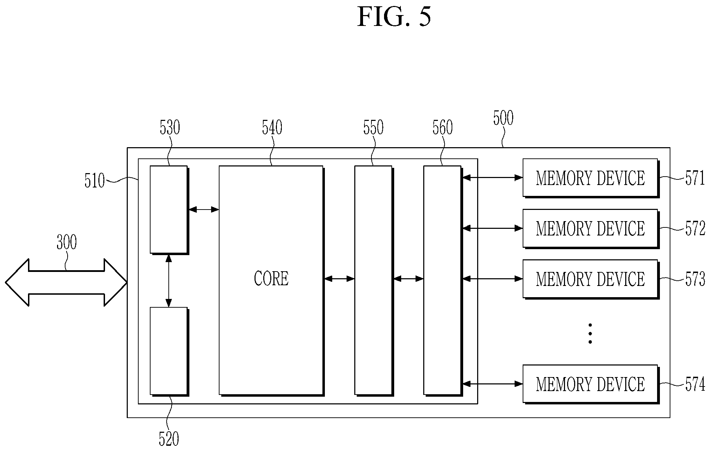

FIG. 5 is a block diagram of a CXL memory, according to an embodiment.

Referring to FIG. 5, the CXL memory 500, according to an embodiment, may include a CXL controller 510 and a plurality of memory devices (e.g., first memory device 571, second memory device 572, third memory device 572, to n-th memory device 574, where n is a positive integer greater than zero (0)). The plurality of memory devices 571 to 574 may store the LLM data. The CXL controller 510 may load data from the plurality of memory devices 571 to 574 and perform the calculation according to the instructions of the host (e.g., host 110 of FIG. 1). For example, the CXL controller 510 may be connected to the host through the CXL interface 300 to receive instructions from the host.

The CXL memory 500 may include and/or may be similar in many respects to or may be the CXL memories 130 and 200 described above with reference to FIGS. 1 and 2, and may include additional features not mentioned above. Furthermore, the CXL controller 510 and the plurality of memory devices 571 to 574 may include and/or may be similar in many respects to or may be the CXL controllers 131 and 210 and the plurality of memory devices 132 and 220, respectively, described above with reference to FIGS. 1 and 2, and may include additional features not mentioned above. Consequently, repeated descriptions of the CXL memory 500, CXL controller 510, and the plurality of memory devices 571 to 574 described above with reference to FIGS. 1 and 2 may be omitted for the sake of brevity.

The CXL controller 510 may include a command buffer (BUF) 520, a control logic (CONT) 530, a calculation circuit (CORE) 540, a memory 550, and a memory controller 560.

The command buffer 520 may receive and store the instructions from the host through the CXL interface 300. For example, the command buffer 520 may receive the instructions from the host through the CXL. io protocol of the CXL interface 300. As another example, the instructions of the host may include commands that instruct to perform the matrix-vector multiplication calculation.

The control logic 530 may generate an internal signal based on the command stored in the command buffer 520. For example, the control logic 530 may generate an internal signal that instructs the calculation circuit 540 to perform the matrix-vector multiplication calculation.

The memory 550 may be a memory inside the CXL controller 510 and may be implemented as an on-chip memory. The memory 550 may receive the instructions from the host through the CXL.mem protocol of the CXL interface 300. For example, the instruction of the host may include a logical address of the input data and/or a logical address of the LLM data.

The memory 550 may include a memory cell that stores data and an instruction circuit (logic) that transmits an instruction to the memory controller 560. For example, the memory cell may store the data received from the plurality of memory devices 571 to 574 through the memory controller 560. In an embodiment, the memory cell may be implemented with a static random access memory (SRAM). However, the present disclosure is not limited in this regard, and the memory cell may be implemented using other types of memory devices.

The instruction circuit may transmit a read command and the like to the memory controller 560 based on the instructions received from the host through the CXL.mem protocol. In some embodiments, the instruction circuit may be positioned in various embodiments, such as being disposed individually outside of the memory 550 and/or integrated with the memory controller 560.

The memory controller 560 may control a plurality of memory devices 571 to 574. According to an embodiment, the memory controller 560 may be implemented as a plurality of memory controllers, so that the plurality of memory controllers may control the plurality of memory devices 571 to 574. In an embodiment, the number of the memory controllers 560 may be the same as the number of the plurality of memory devices 571 to 574, and the memory controllers 560 and plurality of memory devices 571 to 574 may have a one-to-one correspondence.

The memory controller 560 may load the input data and/or the LLM data from the plurality of memory devices 571 to 574 based on a read command of the memory 550. The memory 550 may output the read command to the memory controller 560 based on the instruction of the host.

The memory controller 560 may store the LLM data in the memory 550. The memory 550 may store the LLM data input from the plurality of memory devices 571 to 574.

The calculation circuit 540 may perform the calculation on the LLM data stored in the memory 550. For example, the calculation circuit 540 may include first to m-th calculation lanes 211_1 to 211_m as described with reference to FIG. 4 and perform the matrix-vector multiplication calculation on the LLM data stored in the memory 550 by using the first to m-th calculation lanes 211_1 to 211_m. That is, the CXL memory 500, according to an embodiment, may achieve high memory bandwidth and large memory capacity by using the plurality of memory devices 571 to 574, and effectively perform the matrix-vector multiplication calculation by using the calculation circuit 540, which may include the plurality of adder trees, thereby potentially reducing the latency and the power consumption when compared to related memory devices.

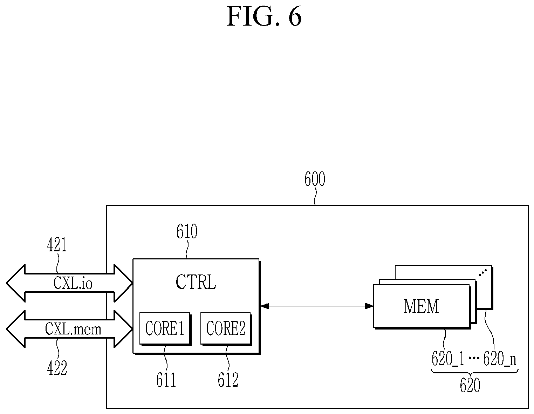

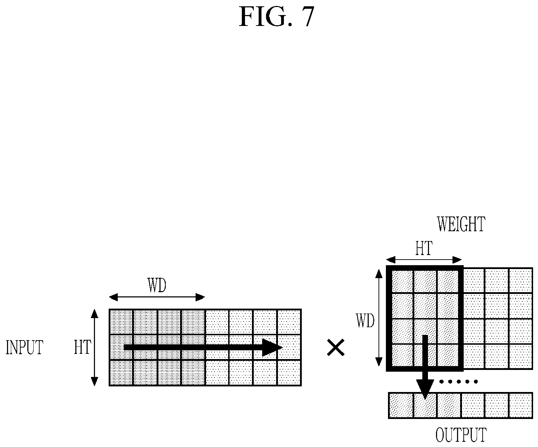

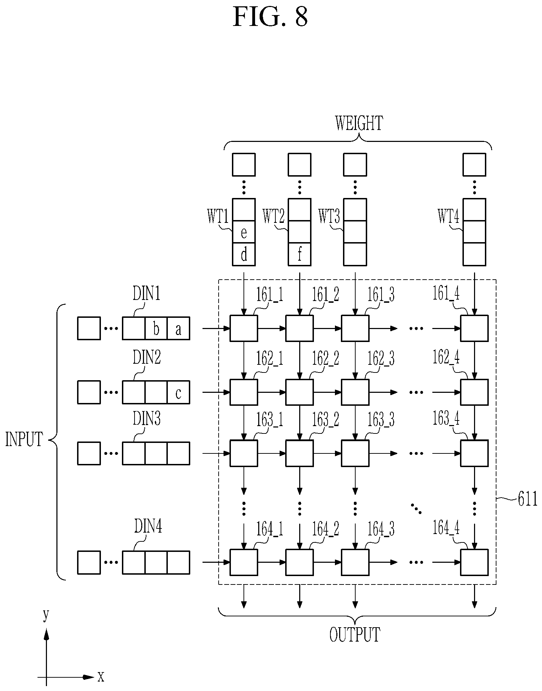

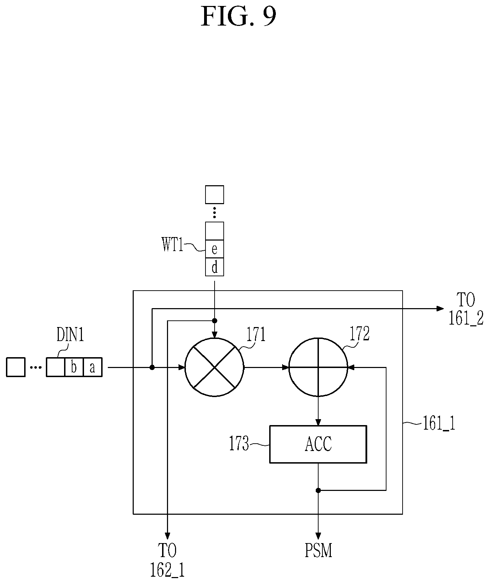

FIG. 6 is a schematic block diagram of a CXL memory, according to an embodiment. FIG. 7 is a view of a matrix-matrix multiplication calculation performed by a calculation circuit of a CXL memory, according to an embodiment. FIG. 8 is a view of a calculation of a calculation circuit, according to an embodiment. FIG. 9 is a circuit diagram of a processing element included in a calculation circuit, according to an embodiment.

Referring to FIG. 6, a CXL memory 600 according to an embodiment may include a CXL controller 610 and a plurality of memory devices 620. The plurality of memory devices 620 may include first to n-th memory devices 620_1 to 620_n storing the LLM data. The CXL controller 610 may include a first calculation circuit 611 and a second calculation circuit 612 that perform calculations on the LLM data retrieved from the plurality of memory devices 620.

The CXL memory 600 may include and/or may be similar in many respects to or may be the CXL memories 130, 200, and 500 described above with reference to FIGS. 1, 2, and 5, and may include additional features not mentioned above. Furthermore, the CXL controller 610 and the plurality of memory devices 620 may include and/or may be similar in many respects to or may be the CXL controllers 131, 210, and 510 and the plurality of memory devices 132, 220, and 571 to 574, respectively, described above with reference to FIGS. 1, 2, and 5, and may include additional features not mentioned above. Consequently, repeated descriptions of the CXL memory 600, CXL controller 610, and the plurality of memory devices 620 described above with reference to FIGS. 1, 2, and 5 may be omitted for the sake of brevity.

The CXL controller 610, according to an embodiment, may receive instructions from the host. For example, the CXL controller 610 may receive commands from the host through the CXL.io protocol 421. The CXL controller 610 may select the first calculation circuit 611 and/or the second calculation circuit 612 based on the command of the host. For example, if the host instructs the matrix-matrix multiplication calculation, the CXL controller 610 may select the first calculation circuit 611. As another example, if the host instructs the matrix-vector multiplication calculation, the CXL controller 610 may select the second calculation circuit 612.

The first calculation circuit 611 may perform the matrix-matrix multiplication calculation on the input data expressed as a matrix and the LLM data expressed as a matrix. In an embodiment, the input data and LLM data may be stored in the plurality of memory devices 620 and moved to the first calculation circuit 611 for the calculation. In an embodiment, the input data may be input to the first calculation circuit 611 from the host through the CXL.mem protocol 422, and the LLM data may be stored in the plurality of memory devices 620 and moved to the first calculation circuit 611 for the calculation. The first calculation circuit 611 may perform the matrix-matrix multiplication calculation as described with reference to FIG. 7. Referring to FIGS. 6 and 7 together, the first calculation circuit 611 may perform the multiplication calculation on the input data INPUT and the LLM data WEIGHT to generate an output data OUTPUT. The first calculation circuit 611 may include a plurality of processing elements of performing the multiplication calculation on a matrix (e.g., HT rows and WD columns) of a size HT × WD from among the input data INPUT, and a matrix of a size WD × HT (e.g., WD rows and HT columns) from among the LLM data WEIGHT, where HT and WD are positive integers greater than zero (0). The number of the plurality of processing elements included in the first calculation circuit 611 may be HT × WD. For example, in the first calculation circuit 611, the WD processing elements may be disposed in the horizontal direction, the HT processing elements may be disposed in the vertical direction, the LLM data WEIGHT may be input in the horizontal direction, and the input data INPUT may be input in the vertical direction. According to an embodiment, the arrangement method of the plurality of processing elements and the input method of the input data INPUT and the LLM data WEIGHT may be implemented differently.

Returning to FIG. 6, the second calculation circuit 612 may perform the matrix-vector multiplication calculation on the input data expressed as a vector and the LLM data expressed as a matrix. In an embodiment, the input data and the LLM data may be stored in the plurality of memory devices 620 and moved to the second calculation circuit 612 for the calculation. In an embodiment, the input data may be input from the host to the second calculation circuit 612 through the CXL.mem protocol 422, and the LLM data may be input to the plurality of memory devices 620 and moved to the second calculation circuit 612 for the calculation. The second calculation circuit 612 may perform the matrix-vector multiplication calculation as described with reference to FIG. 3. The second calculation circuit 612 may include and/or may be similar in many respects to or may be the adder tree of the calculation circuit 211 of FIG. 4. Accordingly, the description for the second calculation circuit 612 is omitted for the sake of brevity.

Referring to FIG. 8, the first calculation circuit 611 may receive the input data INPUT and the LLM data WEIGHT. The input data INPUT and the LLM data WEIGHT may be input to the first calculation circuit 611 through a buffer memory. The first calculation circuit 611 may perform the matrix-matrix multiplication calculation on the input data INPUT and the LLM data WEIGHT. The input data INPUT may include first to fourth input data DIN1 to DIN4, and the LLM data WEIGHT may include first to fourth LLM data WT1 to WT4. The first calculation circuit 611 may include a plurality of processing elements (e.g., processing elements 161_1 to 164_4). In the plurality of processing elements 161_1 to 164_4, the WD processing elements may be disposed in the horizontal direction (e.g., the x direction), the HT processing elements may be disposed in the vertical direction (e.g., the y direction), and the first calculation circuit 611 may include a total of the WD × HT processing elements 161_1 to 164_4.

As shown in FIG. 8, the plurality of processing elements 161_1 to 164_4 may be disposed in a systolic array structure. However, the present disclosure is not limited in this regard. That is, the plurality of processing elements 161_1 to 164_4 may be disposed in different topologies such as, but not limited to, a linear array structure, a ring structure, a star structure, a tree structure, a mesh structure, a completely connected structure, a chordal ring structure, a three dimensional cube structure, and the like.

Although FIG. 8 depicts the first calculation circuit 611 as an output-stationary (OS) dataflow method, the present disclosure is not limited in this regard, and the first calculation circuit 611 may be implemented using other dataflow methods such as, but not limited to, a weight-stationary (WS) method, an input-stationary (IS) method, a row-stationary (RS) method, a no local reuse (NLR) method, and the like.

The first calculation circuit 611 may be operated based on a clock signal. For example, the first calculation circuit 611 may sequentially input an input data INPUT and an LLM data WEIGHT for each cycle of the clock signal. The cycle may represent an oscillation period of a clock signal. For example, the first calculation circuit 611 may input a first data (e.g., "a") of the first input data DIN1 in the first cycle of the clock signal and a first data (e.g., "d") of the first LLM data WT1 to the processing element 161_1. The first calculation circuit 611 may input a second data (e.g., "b") of the first input data DIN1 in the second cycle following the first cycle of the clock signal and a second data (e.g., "e") to the processing element 161_1 of the first LLM data WT1. That is, the processing element 161_1 may perform the calculation on the first input data (e.g., "a") and the first LLM data (e.g., "d") in the first cycle, and perform the calculation on the second input data (e.g., "b") and the second LLM data (e.g., "e") in the second cycle.

The processing element 161_1 may transmit the first input data (e.g., "a") to the processing element 161_2 and the first LLM data (e.g., "d") to the processing element 162_1 in the second cycle. The first calculation circuit 611 may input a first data (e.g., "c") of the second input data DIN2 to the processing element 162_1 in the second cycle. The processing element 162_1 may perform calculations on the first data (e.g., "c") and the first LLM data (e.g., "d") in the second cycle. The first calculation circuit 611 may input a first data (e.g. "f") of the second LLM data WT2 to the processing element 161_2 in the second cycle. The processing element 161_2 may perform calculations on the first input data (e.g., "a") and the first LLM data (e.g., "f") in the second cycle.

In an embodiment, the plurality of processing elements 161_1 to 164_4 of the first calculation circuit 611 may perform the matrix-matrix multiplication calculation on the input data INPUT and the LLM data WEIGHT and output the output data OUTPUT of the calculation result. The first calculation circuit 611 may transmit the output data OUTPUT to the plurality of memory devices 620 through the buffer memory.

Referring to FIGS. 8 and 9 together, the processing element 161_1, according to an embodiment, may include a multiplier 171, an adder 172, and an accumulator (ACC) 173. The processing element 161_1 may receive the first input data (e.g., "a") and the first LLM data (e.g., "d") in the first cycle of the clock signal. The multiplier 171 may generate a first calculation value by performing the multiplication calculation on the first input data (e.g., "a") and the first LLM data (e.g., "d"). The multiplier 171 may output the first calculation value to the adder 172. The adder 172 may perform the addition calculation on the calculation value output by the multiplier 171 and the accumulated value output by the accumulator 173. In the first cycle, there is no accumulated value output by the accumulator 173, so the adder 172 may transmit the first calculation value to the accumulator 173. The accumulator 173 may store the first calculation value. The processing element 161_1 may transmit the first input data (e.g., "a") to the processing element 161_2 and the first LLM data (e.g., "d") to the processing element 162_1 in the second cycle. The processing element 161_2 and the processing element 162_1 may perform calculations in a similar manner to the processing element 161_1.

The processing element 161_1 may receive the second input data (e.g., "b") and the second LLM data (e.g., "e") input in the second cycle of the clock signal. The multiplier 171 may generate a second calculation value by performing the multiplication calculation on the second input data (e.g., "b") and the second LLM data (e.g., "e"). The multiplier 171 may output the second calculation value to the adder 172. The adder 172 may generate the first accumulated value by performing the addition calculation on the second calculation value output by the multiplier 171 and the first calculation value output by the accumulator 173. The adder 172 may transmit the first accumulated value to the accumulator 173. The accumulator 173 may store the first accumulated value. The accumulator 173 may transmit the first accumulated value to the adder 172 in the third cycle following the second cycle. When the calculation of the processing element 161_1 is completed, the adder 172 may output a stored accumulated value PSM. The accumulated values of the plurality of processing elements 161_1 to 164_4 may be transmitted to the plurality of memory devices as an output data OUTPUT.

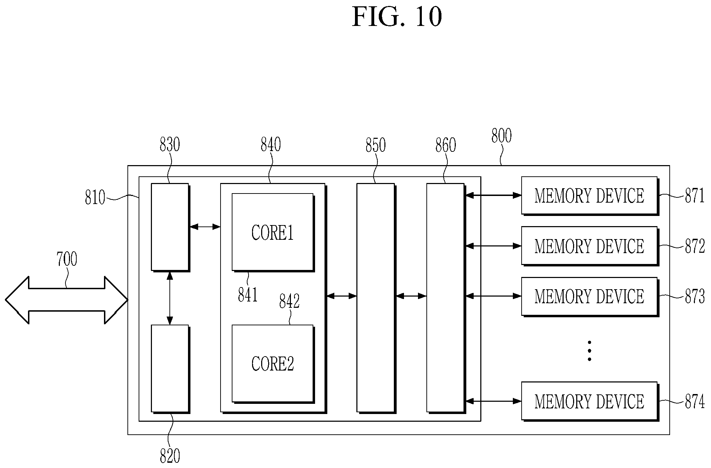

FIG. 10 is a block diagram of a CXL memory, according to an embodiment.

Referring to FIG. 10, the CXL memory 800, according to an embodiment, may include a CXL controller 810 and a plurality of memory devices (e.g., first memory device 871, second memory device 872, third memory device 873, to n-th memory device 874, where n is a positive integer greater than zero (0)). The plurality of memory devices 871 to 874 may store the LLM data. According to an embodiment, the input data may be stored in the plurality of memory devices 871 to 874 and/or may be received from the host to the CXL controller 810. The CXL controller 810 may perform the calculation by loading data from plurality of memory devices 871 to 874, according to the instruction of the host. For example, the CXL controller 810 may be connected to the host through the CXL interface 700 to receive an instruction from the host.

The CXL controller 810 may include a command buffer 820, a control logic 830, a calculation engine 840, memory 850, and a memory controller 860. The command buffer 820, the control logic 830, the memory 850, and the memory controller 860 may include and/or may be similar in many respects to or may be the command buffer 520, the control logic 530, the memory 550, and the memory controller 560 of FIG. 5, and may include additional features not mentioned above. Accordingly, repeated descriptions of the command buffer 820, the control logic 830, the memory 850, and the memory controller 860 described above with reference to FIG. 5 may be omitted for the sake of brevity.

The host may transmit a command instructing the calculation to the CXL controller 810 through the CXL interface 700. The calculation may include a matrix-matrix multiplication calculation and/or a matrix-vector multiplication calculation. The command buffer 820 may store host commands. The control logic 830 may generate an internal signal based on the command stored in the command buffer 820. For example, if the command stored in command buffer 820 is related to the matrix-matrix multiplication calculation, the control logic 830 may generate a first signal. Alternatively or additionally, if the command stored in command buffer 820 is related to the matrix-vector multiplication calculation, the control logic 830 may generate a second signal.

The calculation engine 840 may include a first calculation circuit (CORE1) 841 and a second calculation circuit (CORE2) 842. The first calculation circuit 841 and the second calculation circuit 842 may include and/or may be similar in many respects to or may be the first calculation circuit 611 and the second calculation circuit 612 of FIG. 6, and may include additional features not mentioned above. The calculation engine 840 may select the first calculation circuit 841 and/or the second calculation circuit 842 based on the internal signal generated by the control logic 830. For example, if the control logic 830 generates the first signal, the calculation engine 840 selects the first calculation circuit 841. Alternatively or additionally, if the control logic 830 generates the second signal, the calculation engine 840 may select the second calculation circuit 842. That is, the first calculation circuit 841 may perform the matrix-matrix multiplication calculation, and the second calculation circuit 842 may perform the matrix-vector multiplication calculation.

The selected calculation circuit (e.g., the first calculation circuit 841 and/or the second calculation circuit 842) may load at least one of the input data and the LLM data from the plurality of memory devices 871 to 874. For example, the memory controller 860 may load at least one of the input data and the LLM data from the plurality of memory devices 871 to 874 to be stored in the memory 850. The selected calculation circuit may receive the input data from the host to be stored in the memory 850. The selected calculation circuit may perform the matrix-matrix multiplication calculation and/or the matrix-vector multiplication calculation on the input data and the LLM data stored in the memory 850.

That is, the CXL memory 800, according to an embodiment, may achieve high memory bandwidth and large memory capacity by using the plurality of memory devices 871 to 874, and may select the first calculation circuit 841, which may perform the matrix-matrix multiplication calculation, and/or the second calculation circuit 842, which may perform the matrix-vector multiplication calculation to be efficiently calculated, thereby potentially reducing latency and energy consumption when compared with a related memory device.

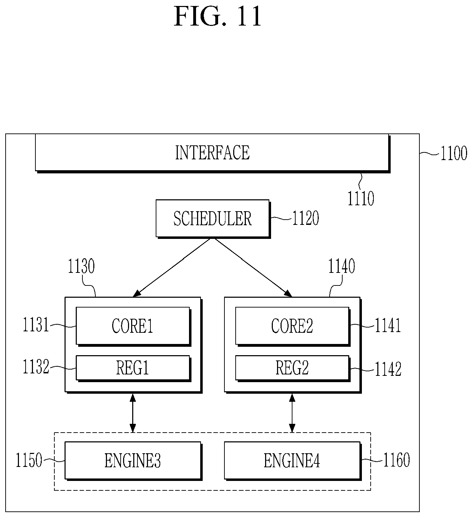

FIG. 11 is a block diagram of a processing engine 1100, according to an embodiment. Exemplarily, the processing engine 1100 of FIG. 11 may be implemented in any one of the CXL memory devices described herein.

Referring to FIG. 11, the processing engine 1100, according to an embodiment, may include an interface 1110, a scheduler 1120, and engines (e.g., first engine 1130, second engine 1140, third engine 1150, and fourth engine 1160).

The interface 1110 may receive data that is the subject of the calculation. For example, the data subjected to the calculation may be an input data and/or an LLM data. The interface 1110 may receive data from a memory (e.g., an on-chip memory and/or an external memory device). The interface 1110 may transmit data to at least one of the first to fourth engines 1130 to 1160.

The scheduler 1120 may select either the first engine 1130 or the second engine 1140 based on the internal signal generated by a control logic (e.g., a control logic 830 in FIG. 10). For example, the scheduler 1120 may select the first engine 1130 when the control logic outputs the first signal, and select the second engine 1140 when the control logic outputs the second signal. The first signal may correspond to the matrix-matrix multiplication calculation instruction of the host, and the second signal may correspond to the matrix-vector multiplication calculation instruction of the host. That is, the first engine 1130 may perform matrix-matrix multiplication calculation, and the second engine 1140 may perform matrix-vector multiplication calculation.

The first engine 1130 may include a first calculation circuit (CORE1) 1131 and a first register (REG1) 1132. The first calculation circuit 1131 may include a processing element array. The processing element array may include WD processing elements in the horizontal direction and HT processing elements in the vertical direction. That is, the processing element array may include a total of WD × HT processing elements, and perform a calculation of the input data with a matrix size of WD × HT. One processing element may include a multiplier and an adder. The first register 1132 may store an input data for the calculation of the first calculation circuit 1131. The first register 1132 may receive the input data from the memory and/or the host. The first calculation circuit 1131 may perform the matrix-matrix multiplication calculation on the input data of the first register 1132 and the LLM data received from the memory device.

In an embodiment, the third engine 1150 and/or the fourth engine 1160 may be configured to perform as an auxiliary engine. For example, the third engine 1150 may perform a preprocessing on at least one of the input data and the LLM data for the calculation of the first engine 1130. In an embodiment, the third engine 1150 may include at least one of a transposer circuit of calculating a transposer matrix of a matrix and an image-to-column (im2col) circuit that converts a multidimensional data into a matrix data. The third engine 1150 may transmit a preprocessed data to the first engine 1130.

The fourth engine 1160 may include a circuit to perform calculations other than the matrix-matrix multiplication calculation and the matrix-vector multiplication calculation. For example, the fourth engine 1160 may perform a calculation of a nonlinear function and may include at least one of a residual circuit, a Gaussian error linear unit (GELU) circuit, and a normalizing (norm) circuit. The residual circuit may combine a previous calculation result and a current calculation result. For example, the residual circuit may combine the previous calculation result and the current calculation result existing at the same position. The previous calculation result and the current calculation result may include data that exists at the same position on a space. The GELU circuit may perform calculations on exponential functions. The normalizing circuit may perform equalization on the data. The fourth engine 1160 may transmit a calculation result to the first engine 1130 and/or the second engine 1140.

The second engine 1140 may include a second calculation circuit (CORE2) 1141 and a second register (REG2) 1142. The second calculation circuit 1141 may include a plurality of adder trees. For example, the second calculation circuit 1141 may include u lanes, where u is a positive integer greater than zero (0). Alternatively or additionally, one lane may include one adder tree. The adder tree may include a plurality of multipliers at a first level where data is input, and a plurality of adders may be disposed from a second level, which is the next level after the first level, to a final level where a calculation result is output. In the adder tree of one lane, the number of the multipliers may be v (where v is a positive integer greater than zero (0)), and the number of the adders may be less than the number of multipliers (e.g., v - 1). That is, the number of the multipliers in the second calculation circuit 1141 may be u × v, and the number of the adders may be u × (v - 1). The second calculation circuit 1141 may perform the matrix-vector multiplication calculation by using plurality of adder trees. The second register 1142 may store an input data for the calculation of the second calculation circuit 1141. The second register 1142 may receive the input data from the memory or the host. The second calculation circuit 1141 may perform the matrix-vector multiplication calculation on the input data of the second register 1142 and the LLM data received from the memory device.

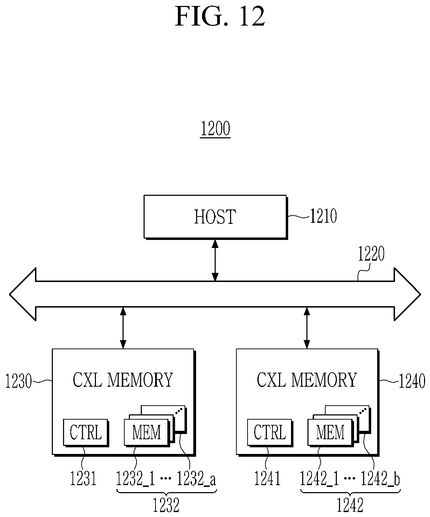

FIG. 12 is a block diagram of a computing system using a CXL memory, according to an embodiment.

Referring to FIG. 12, a computing system 1200, according to an embodiment, may be and/or may include a server or a data center. The computing system 1200 may provide services to a plurality of tenants. In an embodiment, the computing system 1200 may provide an artificial intelligence (AI) service.

The computing system 1200, according to an embodiment, may include a host 1210, a first CXL memory 1230, and a second CXL memory 1240. The first CXL memory 1230 may provide a service to a first tenant among the plurality of tenants by storing a first LLM data, and the second CXL memory 1240 may provide a service to a second tenant among the plurality of tenants by storing a second LLM data. The host 1210, the first CXL memory 1230, and the second CXL memory 1240 may be connected and communicate through the CXL interface 1220. The CXL interface 1220 may include lower protocols such as, but not limited to, a CXL.io protocol, CXL.mem protocol, and a CXL.cache protocol. The first CXL memory 1230 and the second CXL memory 1240 may communicate with each other through the CXL interface 1220.

The host 1210 may control the overall operations of the computing system 1200. In an embodiment, the host 1210 may be and/or may include one of various processors such as, but not limited to, a CPU, a GPU, a NPU, a DPU, and the like. In an embodiment, the host 1210 may include a single core processor or a multi-core processor. The host 1210 may output a command instructing a calculation to the first CXL memory 1230 and/or the second CXL memory 1240. For example, the host 1210 may output a first command to the first CXL memory 1230 and a second command to the second CXL memory 1240. The host 1210 may indicate the matrix-matrix multiplication calculation and/or the matrix-vector multiplication calculation. The host 1210 may transmit a command by using the CXL.io protocol of the CXL interface 1220. The first CXL memory 1230 may perform a calculation based on the first command and provide the AI service to the first tenant. The second CXL memory 1240 may perform a calculation based on the second command and provide the AI service to the second tenant.

The first CXL memory 1230 may include CXL controller 1231 and plurality of memory device 1232. The CXL controller 1231 may store data in plurality of memory devices 1232 and/or transmit data stored in the plurality of memory devices 1232 to the host 1210, according to the control of the host 1210.

The plurality of memory devices 1232 may include a first memory device 1232_1 to an a-th memory device 1232_a and may store first LLM data, where a is a positive integer greater than zero (0). The CXL controller 1231 may load the first LLM data of the plurality of memory devices 1232 according to the first command of the host 1210 and perform a calculation. In an embodiment, the plurality of memory devices 1232 may be and/or may include a DRAM. However, the present disclosure is not limited in this regard. That is, the plurality of memory devices 1232 may be and/or may include other types of memory devices.

The second CXL memory 1240 may include a CXL controller 1241 and a plurality of memory devices 1242. The plurality of memory devices 1242 may include a first memory device 1241 to a b-th memory device 1242_b and may store a second LLM data, where b is a positive integer greater than zero (0). The CXL controller 1241 may perform a calculation on the second LLM data based on a second command of the host 1210. The embodiments of the CXL memory described with reference to FIG. 1 to FIG. 11 may be similarly applied to the first CXL memory 1230 and the second CXL memory 1240. For example, the first CXL memory 1230 and the second CXL memory 1240 may include one or more calculation circuits. The calculation circuit may include a processing element array for performing the matrix-matrix multiplication calculation and/or an adder tree for performing the matrix-vector multiplication calculation. If the first CXL memory 1230 and the second CXL memory 1240 include two calculation circuits, the first CXL memory 1230 and the second CXL memory 1240 may select the calculation circuit based on instructions from the host 1210. In addition, it is to be understood that CXL memories of the different embodiments may be similarly applied to the first CXL memory 1230 and the second CXL memory 1240.

In an embodiment, the host 1210, the first CXL memory 1230, and the second CXL memory 1240 may be configured to share the same interface with each other. For example, the host 1210, the first CXL memory 1230, and the second CXL memory 1240 may communicate with each other through the CXL interface 1220. In an embodiment, the CXL interface 1220 may refer to a low-latency and high-bandwidth link that enables various connections between accelerators, memory devices, or various electronic devices by supporting memory consistency, multiplexed memory access, and a dynamic protocol multiplexing of input/output protocols.

The host 1210, according to an embodiment, may service an LLM to the plurality of tenants by using the first CXL memory 1230 and the second CXL memory 1240, which support high memory bandwidth and large memory capacity by using the CXL interface 1220. That is, the computing system 1200, according to an embodiment, may shorten movement time of the LLM data and lower overhead in terms of an execution time and an energy by applying the first and second CXL memories 1230 and 1240, which store the LLM data, respectively. Alternatively or additionally, the computing system 1200, according to an embodiment, may select an appropriate calculation circuit depending on the calculation type of the LLM, so that an efficient calculation may be performed with low latency and low energy.

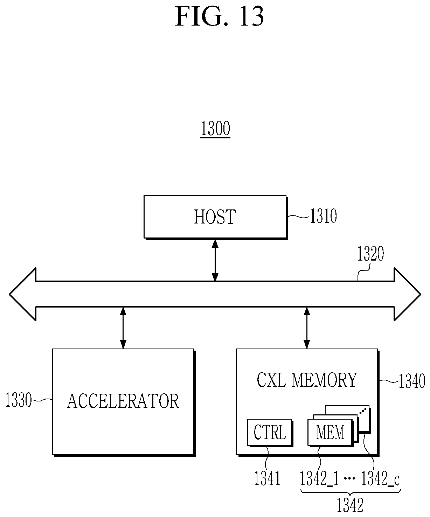

FIG. 13 is a block diagram of a computing system using a CXL memory according to an embodiment.

Referring to FIG. 13, the computing system 1300, according to an embodiment, may be and/or may be included in user devices such as, but not limited to, PCs, laptop computers, servers, data centers, media players, digital cameras, and the like, and/or vehicle equipment such as, but not limited to, navigation systems, black boxes, automotive electronic devices, and the like. Alternatively or additionally, the computing system 1300 may be and/or may include a mobile system such as, but not limited to, a portable communication terminal, a smartphone, a tablet PC, a wearable device, a healthcare device, an IoT device, and the like. The computing system 1300 may provide AI services.

The computing system 1300, according to an embodiment, may include a host 1310, an accelerator 1330, and a CXL memory 1340. The accelerator 1330 and the CXL memory 1340 may provide the AI service by performing a calculation on an LLM data. The accelerator 1330 may perform calculations on the first LLM data, and the CXL memory 1340 may perform calculations on the second LLM data. According to an embodiment, the first LLM data and the second LLM data may be the same or may be different. That is, the accelerator 1330 and the CXL memory 1340 may separately perform calculations on the same LLM data and/or respectively perform calculations on the different LLM data. The host 1310, the accelerator 1330, and the CXL memory 1340 may be connected and communicate through a CXL interface 1320. The CXL interface 1320 may include lower protocols such as, but not limited to, a CXL.io protocol, a CXL.mem protocol, and a CXL.cache protocol. The accelerator 1330 and the CXL memory 1340 may communicate with each other through the CXL interface 1320.

The host 1310 may control the overall operations of the computing system 1300. In an embodiment, the host 1310 may be and/or may include one of various processors such as, but not limited to, a CPU, a GPU, a NPU, a DPU, and the like. In an embodiment, the host 1310 may include a single core processor or a multi-core processor. The host 1310 may output a command instructing a calculation to the accelerator 1330 and/or the CXL memory 1340. The host 1310 may indicate the matrix-matrix multiplication calculation and/or the matrix-vector multiplication calculation. The host 1310 may output the first command to the accelerator 1330 and the second command to the CXL memory 1340. In an embodiment, the host 1310 may instruct the matrix-matrix multiplication calculation to the accelerator 1330 and the matrix-vector multiplication calculation to the CXL memory 1340. In an embodiment, the host 1310 may instruct the matrix-matrix multiplication calculation to the accelerator 1330 and the matrix-matrix multiplication calculation and/or the matrix-vector multiplication calculation to the CXL memory 1340. Alternatively or additionally, the accelerator 1330 may output a third command to the CXL memory 1340. For example, the accelerator 1330 may instruct the matrix-matrix multiplication calculation and/or the matrix-vector multiplication calculation to the CXL memory 1340. In an embodiment, when the accelerator 1330 receives the matrix-vector multiplication calculation from the host 1310, the accelerator 1330 may instruct the matrix-vector multiplication calculation to the CXL memory 1340. In an embodiment, if the accelerator 1330 receives the matrix-matrix multiplication calculation from the host 1310 and an available memory of the accelerator 1330 is lower than a threshold value, the accelerator 1330 may instruct the matrix-matrix multiplication calculation to the CXL memory 1340. The accelerator 1330 may perform calculations based on a first command, and the CXL memory 1340 may perform calculations based on at least one of a second command and a third command. In an embodiment, the CXL memory 1340 may process the second command with priority over the third command.

The host 1310 may transmit commands to the accelerator 1330 and/or the CXL memory 1340 by using the CXL.io protocol of the CXL interface 1320. The accelerator 1330 may transmit commands to the CXL memory 1340 by using the CXL.io protocol of the CXL interface 1320. The accelerator 1330 may improve the performance of the computing system 1300 by distributing a workload of the host 1310, when compared with a related memory device. The accelerator 1330 may be and/or may include one of various processors such as, but not limited to, a GPU, a NPU, a DPU, and the like. The accelerator 1330 may perform a calculation on the first LLM data based on the first command of the host 1310. The accelerator 1330 may store the first LLM data in the memory thereof, and the processor of the accelerator 1330 may load the first LLM data from the memory to perform calculations.

The CXL memory 1340 may include a CXL controller 1341 and a plurality of memory devices 1342. The CXL controller 1341 may store data in the plurality of memory devices 1342 and/or transmit data stored in the plurality of memory devices 1342 to the host 1310 according to the control of the host 1310.

The plurality of memory devices 1342 may include a first memory device 1342_1 to a c-th memory device 1342_c and may store second LLM data, where c is a positive integer greater than zero (0). The CXL controller 1341 may load the second LLM data of the plurality of memory devices 1342 according to the second command of the host 1310 and perform a calculation. In an embodiment, the plurality of memory devices 1342 may be and/or may include a DRAM. However, the present disclosure is not limited in this regard. That is, the plurality of memory devices 1342 may be and/or may include other types of memory devices.

The embodiments of the CXL memory described with reference to FIG. 1 to FIG. 11 may be similarly applied to the CXL memory 1340. For example, the CXL memory 1340 may include one or more calculation circuits. The calculation circuit may include a processing element array for performing the matrix-matrix multiplication calculation and/or an adder tree for performing the matrix-vector multiplication calculation. If the CXL memory 1340 includes two calculation circuits, the CXL memory 1340 may select the calculation circuit based on instructions from the host 1310.

In an embodiment, the host 1310, the accelerator 1330, and the CXL memory 1340 may be configured to share the same interface with each other. For example, the host 1310, the accelerator 1330, and the CXL memory 1340 may communicate with each other through the CXL interface 1320. In an embodiment, the CXL interface 1320 may refer to a low-latency and high-bandwidth link that enables various connections between accelerators, memory devices, or various electronic devices by supporting memory consistency, multiplexed memory access, and a dynamic protocol multiplexing of input/output protocols.

The host 1310 or the accelerator 1330, according to an embodiment, may service an LLM by using the CXL memory 1340, which supports high memory bandwidth and large memory capacity by using the CXL interface 1320. That is, the computing system 1300, according to an embodiment, may perform efficient calculation by applying the accelerator 1330 and the CXL memory 1340, thereby potentially shortening the movement time of the LLM data and lowering overhead in terms of the execution time and the energy, when compared to related memory devices. Alternatively or additionally, the CXL memory 1340, according to an embodiment, may select an appropriate calculation circuit depending on the calculation type of the LLM, so the computing system 1300 may perform the efficient calculation with low latency and low energy.

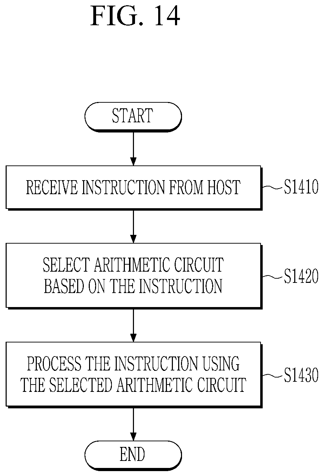

FIG. 14 is a flowchart of a calculation method of a CXL memory, according to an embodiment.

Referring to FIG. 14, a CXL memory, according to an embodiment, may receive a command of a host (operation S1410). The host and the CXL memory may be connected through a CXL interface. The host may transmit commands to the CXL memory by using a CXL.io protocol of the CXL interface. The host may instruct at least one of matrix-matrix multiplication calculation and matrix-vector multiplication calculation to the CXL memory.

The CXL memory may select the calculation circuit based on the command of the host (operation S1420). The CXL memory may include a first calculation circuit that performs matrix-matrix multiplication calculation and a second calculation circuit that performs matrix-vector multiplication calculation. The first calculation circuit may include a PE array in which a plurality of processing elements are disposed. One processing element may include a multiplier and an adder. In an embodiment, one processing element may include one multiplier and one adder, but the present disclosure is not limited thereto.

The second calculation circuit may include an adder tree in which a plurality of multipliers and a plurality of adders configured to perform calculations in a tree shape. The plurality of multipliers may be disposed at a first level of the adder tree where data is input, and the plurality of adders may be disposed from a second level to a final level. At the final level, calculation results may be output. The CXL memory may select the first calculation circuit when the host indicates the matrix-matrix multiplication calculation, and may select the second calculation circuit when the host indicates the matrix-vector multiplication calculation.

The CXL memory may process commands by using the selected calculation circuit (operation S1430). For example, the CXL memory may perform the matrix-matrix multiplication calculation by using a first calculation circuit, and/or may perform the matrix-vector multiplication calculation by using a second calculation circuit. The CXL memory may load an input data and an LLM data from a memory device. According to an embodiment, the CXL memory may receive the input data from the host and load the LLM data from the memory device. Within the CXL memory, the first calculation circuit and the second calculation circuit, and the memory device may be disposed separately. The selected calculation circuit may perform a multiplication calculation on the input data and the LLM data.

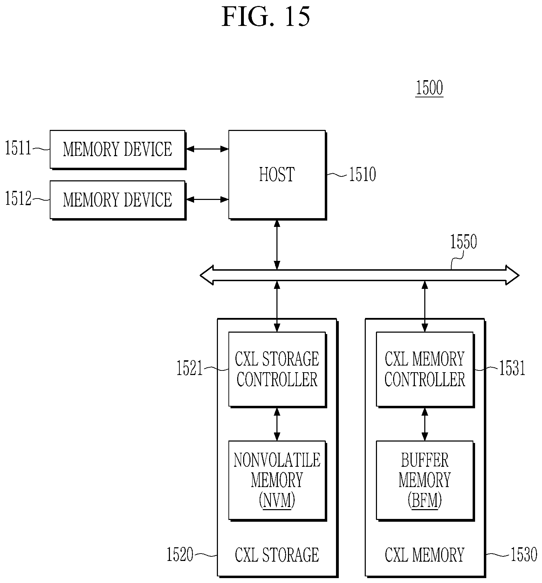

FIG. 15 is a block diagram of a computing system to which a storage system, according to an embodiment, is applied.

Referring to FIG. 15, a computing system 1500 may include a host 1510, a plurality of memories (e.g., first memory 1511 and second memory 1512), a CXL storage 1520, and a CXL memory 1530. In an embodiment, a computing system 1500, according to an embodiment, may be and/or may be included in user devices such as, but not limited to, PCs, laptop computers, servers, data centers, media players, digital cameras, and the like, and/or vehicle equipment such as, but not limited to, navigation systems, black boxes, automotive electronic devices, and the like. Alternatively or additionally, the computing system 1500 may be and/or may include a mobile system such as, but not limited to, a portable communication terminal, a smartphone, a tablet PC, a wearable device, a healthcare device, an IoT device, and the like. The computing system 1500 may provide AI services.

The host 1510 may control the overall operations of the computing system 1500. In an embodiment, the host 1510 may be and/or may include one of various processors such as, but not limited to, a CPU, a GPU, a NPU, a DPU, and the like. In an embodiment, the host 1510 may include a single core processor or a multi-core processor.

The plurality of memory devices 1511 and 1512 may be used as a main memory and/or a system memory of the computing system 1500. In an embodiment, each of the plurality of memory devices 1511 and 1512 may be a DRAM device and may have a dual in-line memory module (DIMM) form factor. However, the scope of the present disclosure is not limited in this regard, and the plurality of memory devices 1511 and 1512 may include a non-volatile memory such as a flash memory, parameter random access memory (PRAM), resistive random access memory (RRAM), magneto-resistive random access memory (MRAM), and the like.

The plurality of memory devices 1511 and 1512 may communicate directly with the host 1510 through the double data rate (DDR) interface. In an embodiment, the host 1510 may include a memory controller configured to control the plurality of memory devices 1511 and 1512. However, the present disclosure is not limited in this regard, and the plurality of memory devices 1511 and 1512 may communicate with the host 1510 through various other interfaces.

The CXL storage 1520 may include a CXL storage controller 1521 and a non-volatile memory (NVM). The CXL storage controller 1521 may store data in a NVM and/or transmit data stored in the NVM to the host 1510 and/or the CXL memory 1530, according to the control of the host 1510. The NVM may store LLM data and may maintain the LLM data even when the CXL storage 1520 is turned off. In an embodiment, the NVM may be a NAND flash memory. However, the scope of the present disclosure is not limited thereto. That is, the NVM may be and/or may include other types of memory devices.

The CXL memory 1530 may include a CXL memory controller 1531 and a buffer memory BFM. The CXL memory controller 1531 may store data in the buffer memory BFM and/or transmit the data stored in the buffer memory BFM to the host 1510 according to the control of host 1510. For example, the CXL memory controller 1531 may store data of plurality of memory devices 1511 and 1512 or the CXL storage 1520 in the buffer memory BFM according to the control of the host 1510. In an embodiment, the buffer memory BFM may be and/or may include a DRAM. However, the present disclosure is not limited in this regard. That is, the buffer memory BFM may be and/or may include other types of memory devices.

The embodiments of the CXL memory described with reference to FIG. 1 to FIG. 11 may be similarly applied to the CXL memory 1530. For example, the CXL memory 1530 may include one or more calculation circuits. The calculation circuit may include a processing element array for performing the matrix-matrix multiplication calculation and/or an adder tree for performing the matrix-vector multiplication calculation. If the CXL memory 1530 includes two calculation circuits, the CXL memory 1530 may select the calculation circuit based on instructions from the host 1510.

In an embodiment, the host 1510, the CXL storage 1520, and the CXL memory 1530 may be configured to share the same interface. For example, the host 1510, the CXL storage 1520, and the CXL memory 1530 may communicate with each other through a CXL interface 1550. In an embodiment, the CXL interface 1550 may refer to a low-latency and high-bandwidth link that enables various connections between accelerators, memory devices, or various electronic devices by supporting memory consistency, multiplexed memory access, and a dynamic protocol multiplexing of input/output protocols.

In an embodiment, the CXL storage 1520 may access the CXL memory 1530 through the CXL interface 1550. For example, the CXL storage 1520 may store the LLM data in an allocated region among the regions of the CXL memory 1530 or read the stored LLM data. Depending on the control of the CXL storage 1520, the CXL memory 1530 may store data (e.g., the LLM data) in the buffer memory BFM and/or transmit the data (e.g., the LLM data) stored in the buffer memory BFM to CXL storage 1520.

In an embodiment, the storage controller of a related storage device may communicate with the host 1510 through a host interface such as a peripheral component interconnect express (PCIe) and/or an NVM express (NVMe), and/or may communicate with a buffer memory through a memory interface such as, but not limited to, a DDR or low-power DDR (LPDDR) interface. That is, the storage controller of the related storage device may communicate with the externally positioned host 1510 and the internally included buffer memory through different interfaces (e.g., heterogeneous interfaces).

In an embodiment, the CXL storage controller 1521 of the CXL storage 1520 may communicate with the host 1510 and the CXL memory 1530 (e.g., a buffer memory) through the CXL interface 1550. That is, the CXL storage controller 1521 of the CXL storage 1520 may communicate with the host 1510 and the CXL memory 1530 through a similar interface or a common interface, and may use some regions of the CXL memory 1530 as a buffer memory.

Although the host 1510, the CXL storage 1520, and the CXL memory 1530 are described as communicating with each other through the CXL interface 1550, the present disclosure is not limited thereto. That is, the host 1510, the CXL storage 1520, and the CXL memory 1530 may communicate with each other based on various other computing interfaces such as, but not limited to, a Gen-Z protocol, a NVLink protocol, a CCIX protocol, and an open CAPI protocol.

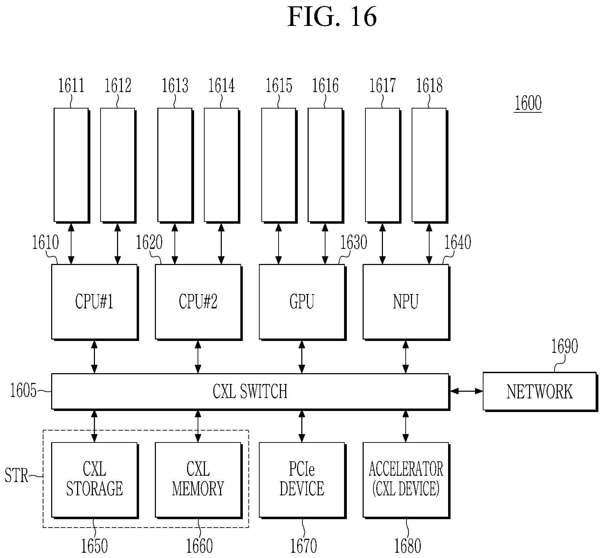

FIG. 16 is a block diagram of a computing system, according to an embodiment. For better understanding and ease of description, detailed descriptions of the constituent elements described above are omitted.

Referring to FIG. 16, a computing system 1600 may include a CXL switch 1605, a first CPU 1610, a second CPU 1620, a GPU 1630, NPU 1640, a CXL storage 1650, a CXL memory 1660, a PCIe device 1670, and an accelerator (e.g., a CXL device) 1680.

The first CPU 1610, the second CPU 1620, the GPU 1630, the NPU 1640, the CXL storage 1650, the CXL memory 1660, the PCIe device 1670, and the accelerator 1680 may be commonly connected to the CXL switch 1605 and each may communicate with each other through the CXL switch 1605.

In an embodiment, each of the first CPU 1610, the second CPU 1620, the GPU 1630, and the NPU 1640 may be the host described with reference to FIG. 1 to FIG. 15, and each may be directly connected to individual memory devices (e.g., first memory device 1611, second memory device 1612, third memory device 1613, fourth memory device 1614, fifth memory device 1615, sixth memory device 1616, seventh memory device 1617, and eighth memory device 1618). In an embodiment, the CXL storage 1650 may be and/or may be similar in many respects to or may be the CXL storage described with reference to FIG. 15, and may include additional features not mentioned above. In an embodiment, the CXL memory 1660 may be and/or may be similar in many respects to or may be the CXL memory described with reference to FIG. 1 to FIG. 11, and may include additional features not mentioned above. For example, the CXL memory 1660 may include one or more calculation circuits. The calculation circuit may include a processing element array for performing the matrix-matrix multiplication calculation and/or an adder tree for performing the matrix-vector multiplication calculation. If the CXL memory 1660 includes two calculation circuits, the CXL memory 1660 may select the calculation circuit based on the instructions of the host.

At least one region of the CXL memory 1660 may be allocated as a dedicated region for the CXL storage 1650 by one or more of the first CPU 1610, the second CPU 1620, the GPU 1630, and the NPU 1640. That is, the CXL storage 1650 and the CXL memory 1660 may be used as the storage space STR of the computing system 1600.

In an embodiment, the CXL switch 1605 may be connected to a PCIe device 1670 and/or an accelerator 1680 configured to support various functions, and the PCIe device 1670 and/or the accelerator 1680 may communicate with the first CPU 1610, the second CPU 1620, the GPU 1630, and the NPU 1640, respectively, through the CXL switch 1605 and/or access the storage space STR including the CXL storage 1650 and the CXL memory 1660.

In an embodiment, the CXL switch 1605 may be connected to an external network (e.g., a network 1690, or a fabric) and may be configured to communicate with an external server through the external network 1690 (or a fabric).

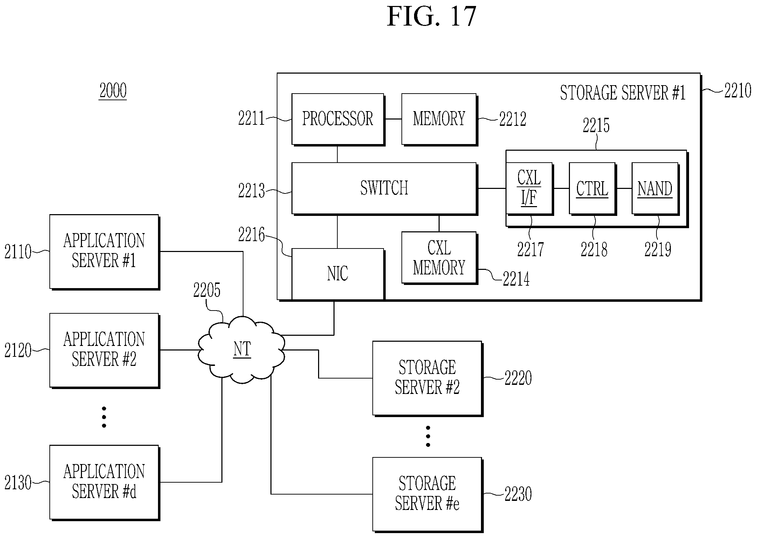

FIG. 17 is a block diagram of a server to which a computing system, according to an embodiment, is applied.

Referring to FIG. 17, a server 2000 may be and/or may include a facility that collects various data and provides services, and may be referred to as a data center or a data storage center. For example, the server 2000 may be a system for operating a search engine and a database, and may be a computing system used in companies and/or entities such as, but not limited to, banks or government agencies. The server 2000 may include application servers (e.g., first application server 2110, second application server 2120, to d-th application server 2130, where d is a positive integer greater than zero (0)), and storage servers (e.g., first storage server 2210, second storage server 2220, to e-th storage server 2230, where e is a positive integer greater than zero (0)). The number of the application servers 2110 to 2130 (e.g., "d") and the number of the storage servers 2210 to 2230 (e.g., "e") may be selected in various ways, according to an embodiment. In an embodiment, the number of the application servers 2110 to 2130 and the number of the storage servers 2210 to 2230 may be different.

In the following, the configuration of the first storage server 2210 is mainly explained. The application servers 2110 to 2130 and the storage servers 2210 to 2230 may each have a similar structure, and the application servers 2110 to 2130 and the storage servers 2210 to 2230 may communicate with each other through a network (NT) 2205.

The first storage server 2210 may include a processor 2211, a memory 2212, a switch 2213, CXL a memory 2214, a storage 2215, and a network interface card (NIC) 2216. The processor 2211 may control the overall operation of the first storage server 2210 and may access the memory 2212 to execute commands loaded into the memory 2212 and/or process data. The memory 2212 may be and/or may include a DDR synchronous DRAM (DDR SDRAM), a high bandwidth memory (HBM), a hybrid memory cube (HMC), a DIMM, an optane DIMM, and/or a non-volatile DIMM (NVM DIMM). The processor 2211 and the memory 2212 may be directly connected, and the number of the processors 2211 and the memory 2212 included in one storage server 2210 may be selected in various ways.

In an embodiment, the processor 2211 and the memory 2212 may provide a processor-memory pair. In an embodiment, the numbers of the processors 2211 and the memory 2212 may be different. The processor 2211 may include a single core processor or multiple core processors. The above description of the storage server 2210 may be similarly applied to each of the application servers 2110 to 2130.

The switch 2213 may be configured to mediate and/or route a communication between various configuration elements included in the first storage server 2210. In an embodiment, the switch 2213 may be a CXL switch implemented based on the CXL protocol.

The CXL memory 2214 may be connected to the switch 2213. In an embodiment, the CXL memory 2214 may be used as a memory expander for the processor 2211. Alternatively or additionally, the CXL memory 2214 may be allocated as a dedicated memory and/or a buffer memory for the storage device 2215.

The embodiments of the CXL memory described with reference to FIG. 1 to FIG. 11 may be similarly applied to the CXL memory 2214. For example, the CXL memory 2214 may include one or more calculation circuits. The calculation circuit may include a processing element array for performing the matrix-matrix multiplication calculation and/or an adder tree for performing the matrix-vector multiplication calculation. If the CXL memory 2214 includes two calculation circuits, the CXL memory 2214 may select the calculation circuit based on instructions from the processor 2211.

The storage device 2215 may include a CXL interface circuit (CXL_IF) 2217, a controller (CTRL) 2218, and a NAND flash (NAND) 2219. The storage device 2215 may store data and/or may output the stored data according to the request of processor 2211. In an embodiment, the storage device 2215 may include and/or may be similar in many respects to or may be the CXL storage described with reference to FIG. 15 and FIG. 16, and may include additional features not mentioned above. In an embodiment, the storage device 2215 may allocate at least some regions of the CXL memory 2214 as a dedicated region and use the dedicated region as a buffer memory.

The network interface card (NIC) 2216 may be connected to the switch 2213. The NIC 2216 may communicate with other storage servers 2220 to 2230 or other application servers 2110 to 2130 through network 2205.

In an embodiment, the NIC 2216 may include a network interface card, a network adapter, and the like. The NIC 2216 may be connected to the network 2205 by a wired interface, a wireless interface, a BLUETOOTH^{™} interface, an optical interface, and the like. The NIC 2216 may include an internal memory, a digital signal processor (DSP), a host bus interface, and the like, and may be connected to a processor 2211 and/or a switch 2213, and the like through a host bus interface. In an embodiment, the NIC 2216 may be integrated with at least one of the processor 2211, the switch 2213, and the storage device 2215.

In an embodiment, the network 2205 may be implemented using a fiber channel (FC) and/or an Ethernet network. As used herein, the FC may refer to a medium used for relatively high-speed data transmission, and an optical switch that provides high performance/high availability may be used. Depending on an access method of the network 2205, the storage servers 2210 to 2230 may be provided as a file storage, a block storage, or an object storage.

In an embodiment, the network 2205 may be a storage-only network, such as, but not limited to, a storage area network (SAN). For example, the SAN may be an FC-SAN that uses an FC network and may be implemented according to a FC Protocol (FCP). As another example, the SAN may be an internet protocol SAN (IP-SAN) that uses a transmission control protocol/internet protocol (TCP/IP) network and may be implemented according to an internet small computer systems interface (e.g., SCSI over TCP/IP or iSCSI) protocol. In an embodiment, the network 2205 may be a general network such as a TCP/IP network. For example, the network 2205 may be implemented according to protocols such as, but not limited to, FC over Ethernet (FCoE), Network Attached Storage (NAS), and NVMe over Fabrics (NVMe-oF).

In an embodiment, at least one of the application servers 2110 to 2130 may store data requested by a user and/or a client to be stored in one of the storage servers 2210 to 2230 through the network 2205. At least one of the application servers 2110 to 2130 may obtain data requested by a user and/or a client to be read from one of the storage servers 2210 to 2230 through the network 2205. For example, at least one of the application servers 2110 to 2130 may be implemented as a web server and/or a database management system (DBMS).

In an embodiment, at least one of the application servers 2110 to 2130 may have access to a memory, a CXL memory, or a storage device included in another application server through the network 2205, or may have access to memories, CXL memories, or storage devices included in the storage servers 2210 to 2230 through the network 2205. Accordingly, at least one of the application servers 2110 to 2130 may perform various operations on the data stored in other application servers and/or the storage servers 2210 to 2230. For example, at least one of the application servers 2110 to 2130 may execute a command to move and/or copy data between other application servers and/or the storage servers 2210 to 2230. In an embodiment, data may be moved from the storage device of the storage servers 2210 to 2230 through the memories and/or CXL memories of the storage servers 2210 to 2230, and/or directly to the memory or CXL memory of the application servers 2110 to 2130. In an embodiment, data moving through the network 2205 may be data encrypted for the purpose of security and/or privacy.

In an embodiment, the storage device included in at least one of the application servers 2110 to 2130 and the storage servers 2210 to 2230 may be allocated with the CXL memory included in at least one of the application servers 2110 to 2130 and the storage servers 2210 to 2230 as a dedicated region, and the storage device may use the allocated private region as a buffer memory. For example, the storage device 2215 included in the storage server 2210 may be allocated with the CXL memory included in another storage server (e.g., 2230), and may access the CXL memory included in another storage server (e.g., 2230) through the switch 2213 and the NIC 2216. In such an example, the LLM data for the storage device 2215 of the first storage server 2210 may be stored in the CXL memory of the other storage server 2230. That is, according to the present disclosure, the storage devices and the CXL memories of the server 2000 may be connected and implemented in various ways.

In some embodiments, each constituent element described with reference to FIG. 1 to FIG. 17 or the combination of two or more constituent elements may be implemented as a digital circuit, a programmable or non-programmable logic device or array, an application specific integrated circuit (ASIC), or the like.

While the present disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A compute express link, CXL, memory device, comprising:
a memory device (132_1-132_n, 220_1-220_n, 620_1-620_n, 571-574, 620_1-620_n, 871-874, 1232_1-1232_a, 1242_1-1242_b, 1342_1-1342_c) storing data; and
a controller (131, 210, 510, 610, 810, 1231, 1241, 1341) configured to:
read the data from the memory device (132_1-132_n, 220_1-220_n, 620_1-620_n, 571-574, 620_1-620_n, 871-874, 1232_1-1232_a, 1242_1-1242_b, 1342_1-1342_c) based on a first command received through a first protocol;
select a calculation engine (840) based on a second command received through a second protocol different from the first protocol; and
control the calculation engine (840) to perform a calculation on the read data.

2. The CXL memory device of claim 1, wherein the first protocol is a CXL.mem protocol (422), and
wherein the second protocol is a CXL.io protocol (421).

3. The CXL memory device of claim 1 or 2, wherein the calculation engine (840) comprises a first calculation circuit (841) and a second calculation circuit (842), and
wherein the controller (131, 210, 510, 610, 810, 1231, 1241, 1341) is further configured to:
select the first calculation circuit (841) based on the second command instructing a matrix-matrix multiplication calculation; and
select the second calculation circuit (842) based on the second command instructing a matrix-vector multiplication calculation.

4. The CXL memory device of claim 3, wherein the first calculation circuit (841) is a processing element, PE, array, and
wherein the second calculation circuit (842) comprises an adder tree.

5. The CXL memory device of claim 3 or 4, wherein the calculation engine further comprises:
a third calculation circuit configured to:
perform a preprocess on the read data; and
transmit the preprocessed data to the first calculation circuit (841),
wherein the first calculation circuit (841) is further configured to perform the calculation based on the preprocessed data.

6. The CXL memory device of any one of claims 1 to 5, wherein the controller comprises:
a control circuit configured to select the calculation engine;
a memory controller configured to read the data from the memory device; and
an on-chip memory configured to store the read data and to transmit the read data to the selected calculation engine.

7. The CXL memory device of claim 6, wherein the controller further comprises:
a command buffer (520, 820) configured to store the second command,
wherein the control circuit is further configured to generate a signal selecting the calculation engine based on the second command.

8. A computing system, comprising:
a host (1310) configured to output at least one of a first calculation command and a second calculation command;
an accelerator (1330) configured to operate based on the first calculation command;
a memory device (1340) configured to operate based on the second calculation command; and
a compute express link, CXL, interface (1320) configured to:
transmit the first calculation command to the accelerator (1330); and
transmit the second calculation command to the memory device (1340).

9. The computing system of claim 8, wherein the CXL interface (1320) is further configured to transmit, through a CXL.io protocol (421), at least one of the first calculation command and the second calculation command.

10. The computing system of claim 8 or 9, wherein the first calculation command instructs a matrix-matrix multiplication calculation, and
wherein the second calculation command instructs a matrix-vector multiplication calculation.

11. The computing system of claim 10, wherein the memory device (1340) comprises an adder tree, and
wherein the memory device (1340) is further configured to process, using the adder tree, the second calculation command.

12. The computing system of claim 11, wherein the CXL interface (1320) is further configured to transmit the first calculation command to the memory device (1340),
wherein the memory device (1340) further comprises a processing element array configured to process the first calculation command, and
wherein the memory device (1340) is configured to process, using the processing element array, the first calculation command.

13. The computing system of claim 12, wherein the memory device (1340) further comprises a control circuit configured to:
select the processing element array based on receiving the first calculation command; and
select the adder tree based on receiving the second calculation command.

14. The computing system of claim 12, wherein the accelerator (1330) is further configured to output a third calculation command to the memory device (1340) based on the first calculation command, and
wherein the memory device(1340) is further configured to process, using the processing element array, the third calculation command.

15. The computing system of claim 14, wherein the CXL interface (1320) is further configured to transmit, through a CXL.io protocol (421), at least one calculation command from among the first calculation command, the second calculation command, and the third calculation command, and
wherein the memory device (1340) is further configured to process the first calculation command with priority over the third calculation command.
